# EUROPÄISCHE PATENTSCHRIFT

(11) **EP 3 453 236 B1**
(45) Veröffentlichungstag und Bekanntmachung des Hinweises auf die Patenterteilung: **22.07.2020**
(21) Anmeldenummer: 18190965.6
(22) Anmeldetag: 27.08.2018
(51) Int. Cl.: A01B 59/06

(54) **ANBAUPLATTENEINHEIT**
MOUNTING PLATE UNIT
UNITÉ DE PLAQUE DE MONTAGE

(30) Priorität: 07.09.2017 DE 102017120599
(43) Veröffentlichungstag der Anmeldung: 13.03.2019
(73) Patentinhaber: Aebi Schmidt Deutschland GmbH, 79837 St. Blasien (DE)
(72) Erfinder: Ramskjaer, Nils Kristian, 4990 Søndeled (NO)
(74) Vertreter: Grättinger Möhring von Poschinger Patentanwälte Partnerschaft mbB

(56) Entgegenhaltungen:
- EP-A2- 2 283 719
- WO-A1-2017/060575
- DE-A1- 2 623 098
- US-A- 5 950 735

## Beschreibung

Die vorliegende Erfindung betrifft eine Anbauplatte umfassende Anbauplatteneinheit für die front- oder heckseitige Anbringung eines Anbaugeräts an einem Trägerfahrzeug.

Zur auswechselbaren front- und/oder heckseitigen Anbringung von Anbaugeräten (z. B. Räumschilden, Schneepflügen, Kehraggregaten, Streuaggregaten, etc.) an Trägerfahrzeugen (z. B. Traktoren oder Kommunalfahrzeuge in Form von LKWs, UNIMOGs ®, etc.) kommen sogenannte Anbauplatten zum Einsatz. Das jeweilige Anbaugerät bildet dabei mit einer diesem zugeordneten Geräteplatte eine Anbaugeräteeinheit, wobei die Geräteplatte zur Schnellmontage an der Anbauplatte des jeweiligen Trägerfahrzeugs hergerichtet ist. Typischerweise sind zu diesem Zweck an der Anbauplatte und der Geräteplatte zueinander korrespondierende Verbindungsmittel (wie beispielsweise Klauen und Klauentaschen) vorgesehen, was eine Montage bzw. Demontage des jeweiligen Anbaugeräts mit vergleichsweise geringem Aufwand ermöglicht.

Die DE 26 23 098 offenbart eine Anbauplatteneinheit für die frontseitige Anbringung eines Anbaugeräts an einem Trägerfahrzeug, mit einer Anbauplatte, zwei jeweils ein unteres Auge umfassenden seitlichen unteren Anbindestrukturen und einer ein oberes Auge umfassenden mittigen oberen Anbindestruktur. Dabei umfasst die obere Anbindestruktur eine starr mit der Anbauplatte verbundene obere Halterung; und die unteren Anbindestrukturen umfassen jeweils eine untere Halterung.

Die US 5 950 735 A offenbart eine Geräteplatte, welche der Anbringung eines Anbaugeräts an einer fahrzeugseitigen Anbauplatte dient. Die - zwei in Form eines nach unten offenen V zueinander angeordnete, miteinander verbundene Schenkel umfassende - Geräteplatte weist drei der Verbindung mit dem Anbaugerät dienende Anbindestrukturen auf. Die in dem Verbindungsbereich der beiden Schenkel vorgesehene obere Anbindestruktur umfasst eine starr mit der Geräteplatte verbundene obere Halterung, an der eine mehrere Augen aufweisende Doppellasche - um eine horizontale Achse verschwenkbar - angelenkt ist. Im Bereich der unteren Enden der Schenkel ist jeweils eine untere Anbindestruktur vorgesehen. Diese umfasst jeweils eine mit dem betreffenden Schenkel starr verbundene Platte und ein an dieser über Schraubbolzen anbringbares Winkelblech, dessen erster Schenkel zur Befestigung des Winkelblechs an der Platte ausgeführt ist und dessen zweiter Schenkel mehrere Augen aufweist. Über einander kreuzende Langlöcher ist jeweils die Position des Winkelblechs bezüglich der zugeordneten Platte in vertikaler sowie horizontaler Richtung veränderbar.

Die WO 2017/060575 A1 offenbart ein dem Anbau eines Anbaugeräts an einem Trägerfahrzeig dienendes System, umfassend eine fahrzeugseitige Anbauplatte sowie eine geräteseitige Geräteplatte. Für ihre 3-Punkt-Anbindung an dem Trägerfahrzeug weist die Anbauplatte zwei seitliche untere Anbindestrukturen mit jeweils einem in den Gabelkopf eines Lenkers einzuhängenden Tragbolzen und eine mittige obere Anbindestruktur mit zwei Halteplatten mit zueinander fluchtenden Augen auf. Die Geräteplatte weist ihrerseits zwei seitliche untere Anbindestrukturen und eine mittige obere Anbindestruktur auf. Letztere umfasst einen schwenkbar gelagerten Lenker. Jede der beiden unteren Anbindestrukturen umfasst eine Augenplatte, welche dergestalt an zwei sich horizontal erstreckenden Bolzen verschiebbar geführt ist, dass der Abstand zwischen den Augen der Augenplatten veränderbar ist.

Die vorliegende Erfindung hat sich zur Aufgabe gemacht, eine kostengünstige Lösung für die Ausstattung von Trägerfahrzeugen, insbesondere von Traktoren mit Anbauplatten bereitzustellen.

Gelöst wird die vorstehende Aufgabenstellung gemäß der vorliegenden Erfindung durch die in Anspruch 1 angegebene Anbauplatteneinheit. Demgemäß zeichnet sich die erfindungsgemäße, für die front- oder heckseitige Anbringung eines Anbaugeräts an einem Trägerfahrzeug bestimmte und geeignete Anbauplatteneinheit dadurch aus, dass sie eine Anbauplatte, zwei jeweils ein unteres Auge umfassenden seitlichen unteren Anbindestrukturen und einer ein oberes Auge umfassenden mittigen oberen Anbindestruktur aufweist, wobei die obere Anbindestruktur eine starr mit der Anbauplatte verbundene obere Halterung umfasst, relativ zu der das obere Auge in einer zur Anbauplatte senkrechten Ebene mit zwei Freiheitsgraden verstellbar ist, und wobei weiterhin die unteren Anbindestrukturen jeweils eine relativ zu der Anbauplatte in unterschiedlichen seitlichen Positionen fixierbare untere Halterung umfassen. Dabei weist die untere Halterung jeweils eine Halteplatte auf, deren seitliche Position relativ zur Anbauplatte stufenlos veränderbar ist. Gemäß einer besonders geeigneten konstruktiven Realisierung dieses Konzepts umfasst die Halteplatte eine Mehrzahl von Langlöchern, in die Bolzen eingreifen, welche an der Anbauplatte fixiert sind. Weiterhin sind gemäß der Erfindung die unteren Augen an jeweils einer Augenlasche vorgesehen, welche an der Halteplatte um eine zur Anbauplatte parallele Achse verschwenkbar angebracht ist; denn auf diese Weise lassen sich - durch Verschwenken der Augenlaschen relativ zu der jeweils zugeordneten Halteplatte - die Augenlaschen bei Bedarf gegenüber der Anbauplatte so abwinkeln, dass auch schwer zugängliche fahrzeugseitige untere Anbringpunkte genutzt werden können. Erst recht gilt dieses, da erfindungsgemäß die gelenkige Anbringung der Augenlaschen an der jeweiligen Halteplatte jeweils eine Verdrehbarkeit der Augenlasche relativ zur Halteplatte um eine auf der Abbauplatte senkrecht stehende Achse ermöglicht; denn so lässt sich sogar die Orientierung der beiden Schwenkachsen, um welche die Augenlaschen relativ zu der jeweils zugeordneten Halteplatte verschwenkbar sind, individuell modifizieren.

Durch die erfindungsgemäße Ausführung lässt sich die Anbauplatteneinheit an unterschiedlichsten Trägerfahrzeugen anbringen; denn die spezifische Ausgestaltung der mittigen oberen Anbindestruktur und der seitlichen unteren Anbindestrukturen ermöglicht eine Adaption der Anbauplatteneinheit an unterschiedlichste fahrzeugseitige Vorgaben. Insbesondere lässt sich ein und dieselbe Anbauplatteneinheit - unter entsprechender Adaption durch bestimmungsgemäße Nutzung der durch die spezifische Ausgestaltung der oberen Anbindestruktur und der unteren Anbindestrukturen bereitgestellten Verstellmöglichkeiten - an verschiedensten Trägerfahrzeugen anbringen, die sich hinsichtlich des Abstands zweier seitlicher unterer Anbringpunkte und/oder der Höhe eines mittigen oberen Anbringpunktes über den beiden seitlichen unteren Anbringpunkten und/oder einen horizontalen Versatz (in Fahrtrichtung) des mittigen oberen Anbringpunktes gegenüber den beiden seitlichen unteren Anbringpunkten voneinander unterscheiden. Durch ihre Eignung zur Anbringung an unterschiedlichsten Trägerfahrzeugen kann die erfindungsgemäße Anbauplatteneinheit nicht nur besonders kostengünstig in großen Stückzahlen hergestellt werden. Der besonderen Wirtschaftlichkeit kommt überdies die einzigartig einfache Logistik sowohl im Bereich der (Erst-)Ausrüstung von Trägerfahrzeugen als auch auf dem Gebiet von Service und Wartung entgegen.

Gemäß einer ersten bevorzugten Weiterbildung der vorliegenden Erfindung umfassen die beiden Freiheitsgrade der oberen Anbindestruktur eine Verschwenkbarkeit eines Augenträgers um eine horizontale, zur Anbauplatte parallele Achse und eine Veränderung der effektiven Länge des Augenträgers. Bei dieser Weiterbildung lassen sich höchste mechanische Anforderungen mit besonders geringem baulichen Aufwand erreichen. Zudem ist auch die Handhabung beispielsweise deutlich einfacher als im Falle einer - im Rahmen der vorliegenden Erfindung prinzipiell ebenfalls möglichen - Ausgestaltung der Erfindung, bei der die beiden Freiheitsgrade der Verstellbarkeit des oberen Auges relativ zu der oberen Halterung eine horizontale und eine vertikale Verschiebbarkeit umfassen.

Im besonders bevorzugter Ausgestaltung der vorstehend dargelegten ersten Weiterbildung der Erfindung umfasst der Augenträger einen in der oberen Halterung schwenkbar gelagerten Schwenkbolzen und einen mit diesem positionsveränderbar verbundenen Tragbolzen. Ganz besonders bevorzugt ist dabei der Tragbolzen als Gewindebolzen ausgeführt und greift in ein an dem Schwenkbolzen ausgeführtes Mutterngewinde ein.

In nochmals anderer bevorzugter Ausgestaltung der vorstehend erläuterten Weiterbildung der Erfindung ist die (ggf. gelenkige) Anbringung der Augenlasche an der Halteplatte jeweils außermittig angeordnet, d.h. die Augenlasche an der Halteplatte jeweils außermittig angeordnet. So lässt sich - durch die Möglichkeit, die Halteplatten an der Anbauplatte mit relativ dicht oder aber relativ weit zueinander beabstandeten Augenlaschen-Anbringungen zu montieren - der für den seitlichen Abstand zwischen den beiden unteren Augen verfügbare Verstellbereich erhöhen, ohne dass dies (beispielsweise durch übermäßig lange Langlöcher) nachteilige Auswirkungen auf die mechanische Festigkeit der unteren Anbindestrukturen hätte.

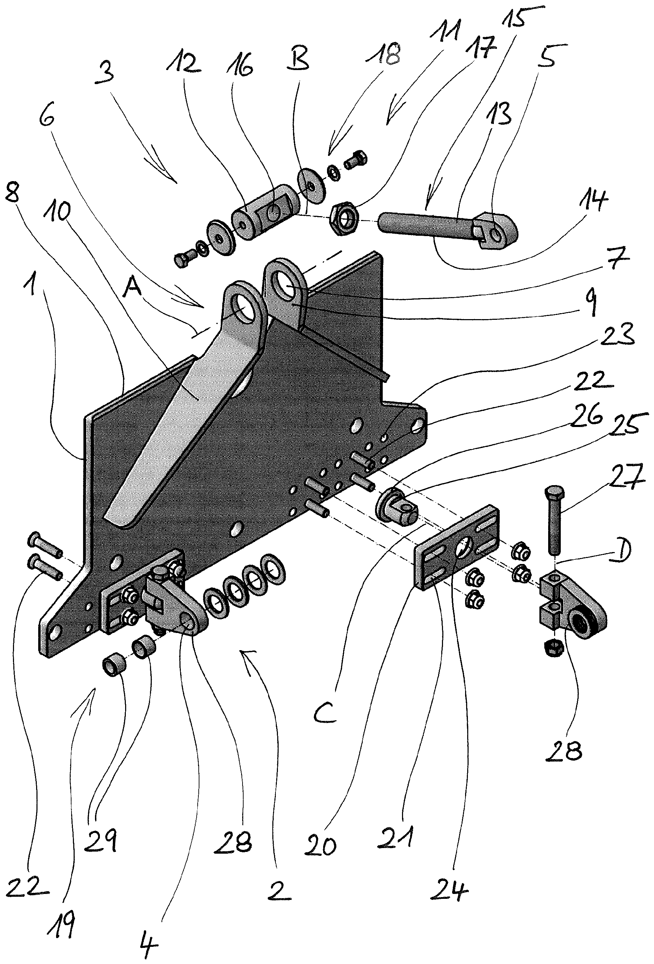

Im Folgenden wird die vorliegende Erfindung anhand eines in der Zeichnung anhand einer "Explosionsdarstellung" veranschaulichten bevorzugten Ausführungsbeispiels näher erläutert.

Die in der Zeichnung wiedergegebene Anbauplatteneinheit umfasst eine Anbauplatte 1 und drei deren Anbringung an einem Trägerfahrzeugt dienende Anbindestrukturen 2, 3, nämlich zwei seitliche untere Anbindestrukturen 2 mit jeweils einem unteren Auge 4 und eine mittige obere Anbindestruktur 3 mit einem oberen Auge 5.

Die obere Anbindestruktur 3 umfasst eine starr mit der Anbauplatte 1 verbundene obere Halterung 6 in Form zweier zueinander paralleler, jeweils einen Durchbruch 7 aufweisender, nach oben über die Oberkante 8 der Anbauplatte 1 hinausragender Laschen 9. Diese sind gebildet durch die oberen Endabschnitte zweier Stege 10, die im Übrigen rückwärtig mit der Anbauplatte 1 dergestalt verschweißt sind, dass sie sich zur Mitte der Anbauplatte 1 hin schräg nach oben erstrecken. Weiterhin umfasst die obere Anbindestruktur 3 einen Augenträger 11 in Form eines in den Durchbrüchen 7 der Laschen 9 um die zur Anbauplatte 1 parallele, horizontale Schwenkachse A schwenkbar gelagerten Schwenkbolzens 12 und eines Tragbolzens 13. Letzterer ist dabei als Gewindebolzen 14 ausgeführt, wobei der Gewindeabschnitt 15 des Tragbolzens 13 in ein an dem Schwenkbolzen 12 ausgeführtes Mutterngewinde 16 mit auf der Schwenkachse A senkrecht stehender Achse B eingreift. So sind der Tragbolzen 13 positionsveränderbar mit dem Schwenkbolzen 12 und dieser wiederum positionsveränderbar mit den Laschen 9 verbundenen, und zwar dergestalt, dass sich eine Verstellbarkeit des oberen Auges 5 relativ zu der Anbauplatte 1 in einer zu dieser senkrechten Ebene mit zwei Freiheitsgraden ergibt. Ein erster Freiheitsgrad besteht in der Verschwenkbarkeit des Augenträgers 11 um eine horizontale, zur Anbauplatte parallele Achse A, und der andere Freiheitsgrad besteht in der Veränderung der effektiven Länge des Augenträgers 11, d. h. des Abstands des oberen Auges 5 zur oberen Halterung 6.

Erkennbar sind in der Zeichnung ergänzend die Kontermutter 17 für den Tragbolzen 13 sowie die beiden endseitig an dem Schwenkbolzen 12 anzubringenden Scheibe-Schraube-Anordnungen 18, mittels derer der Schwenkbolzen 12 unverlierbar in den beiden Laschen 9 gehalten wird. Die beiden seitlichen unteren Anbindestrukturen 2 umfassen jeweils eine untere Halterung 19 mit einer Halteplatte 20. Die Halteplatten 20 sind an der Rückseite der Anbauplatte 1 in unterschiedlichen seitlichen Positionen fixierbar, indem sie jeweils vier Langlöcher 21 aufweisen, welche zum Zusammenwirken mit vier an der Anbauplatte 1 fixierbaren Schraubbolzen 22 bestimmt sind. Im Interesse eines großen Verstellbereichs sind dabei für eine Positionierung der Schraubbolzen 22 jeweils eine Mehrzahl von Bohrungen 23 vorhanden.

Die Halteplatten 20 weisen jeweils einen Durchbruch 24 auf, in dem ein Scharnierzapfen 25 um eine zu der Anbauplatte 1 senkrechte Achse C verdrehbar gelagert ist. Durch eine gestufte Ausführung des Durchbruchs 24 und einen formschlüssig in diesen eingreifenden Kopf 26 des jeweiligen Scharnierzapfens 25 wird dabei allerdings eine axiale Lagesicherung des Scharnierzapfens 25 gewährleistet. Mit dem Scharnierzapfen 25 ist jeweils, um eine zu der Anbauplatte 1 parallele, durch den jeweiligen Scharnierbolzen 27 definierte Achse D verschwenkbar, eine das jeweilige untere Auge 4 aufweisende Augenlasche 28 verbunden.

Die Durchbrüche 24 für die Scharnierzapfen 25 sind in den Halteplatten 20 nicht mittig, sondern vielmehr außermittig, d. h. zu der jeweiligen Mitte - im Sinne der Orientierung der Langlöcher 21 - seitlich versetzt angeordnet. So lässt sich durch eine um 180° gedrehte Anbringung der Halteplatten 20 an der Anbauplatte 1 die Variabilität erhöhen. Dies gilt insbesondere auch, wenn die Durchbrüche 24, was allerdings nicht dargestellt ist, zusätzlich oder alternativ bezüglich der Höhe, d. h. quer zur Orientierung der Langlöcher 21, außermittig angeordnet sind; denn hierdurch lässt sich durch eine um 180° gedrehte Anbringung der Halteplatten 20 an der Anbauplatte 1 der vertikale Abstand der unteren Augen 4 zu der oberen Halterung 6 verändern.

Bei der gezeigten Ausgestaltung der Anbauplatteneinheit lässt sich beispielsweise der Abstand zwischen den unteren Augen 4 bei zu der Anbauplatte 1 senkrechter Orientierung der Augenlaschen 28 stufenlos zwischen etwa 400mm und 725mm variieren.

Erkennbar sind in der Zeichnung ergänzend Reduzierhülsen 29 zu sehen, welche sich in die unteren Augen 4 einsetzen lassen, um diese an unterschiedliche untere Anbringpunkte des Trägerfahrzeugs adaptieren zu können.

## Patentansprüche

1. Anbauplatteneinheit für die front- oder heckseitige Anbringung eines Anbaugeräts an einem Trägerfahrzeug, mit einer Anbauplatte (1), zwei jeweils ein unteres Auge (4) umfassenden seitlichen unteren Anbindestrukturen (2) und einer ein oberes Auge (5) umfassenden mittigen oberen Anbindestruktur (3), mit den folgenden Merkmalen:
die obere Anbindestruktur (3) umfasst eine starr mit der Anbauplatte (1) verbundene obere Halterung (6), relativ zu der das obere Auge (5) in einer zur Anbauplatte (1) senkrechten Ebene mit zwei Freiheitsgraden verstellbar ist;
die unteren Anbindestrukturen (2) umfassen jeweils eine relativ zu der Anbauplatte (1) in unterschiedlichen seitlichen Positionen fixierbare untere Halterung (19), welche eine Halteplatte (20) aufweist, deren seitliche Position relativ zur Anbauplatte (1) stufenlos veränderbar ist;
die unteren Augen (4) sind an jeweils einer Augenlasche (28) vorgesehen, welche an der betreffenden Halteplatte (20) um eine zur Anbauplatte (1) parallele Achse (D) verschwenkbar angebracht ist, wobei die Anbringung der Augenlasche (28) an der Halteplatte (20) jeweils eine Verdrehbarkeit der Augenlasche (28) relativ zur Halteplatte (20) um eine auf der Anbauplatte (1) senkrecht stehende Achse (C) ermöglicht.

2. Anbauplatteneinheit nach Anspruch 1, **dadurch gekennzeichnet, dass** die beiden Freiheitsgrade der oberen Anbindestruktur (3) eine Verschwenkbarkeit eines Augenträgers (11) um eine horizontale, zur Anbauplatte (1) parallele Achse (A) und eine Veränderung der effektiven Länge des Augenträgers (11) umfassen.

3. Anbauplatteneinheit nach Anspruch 2, **dadurch gekennzeichnet, dass** der Augenträger (11) einen in der oberen Halterung (6) schwenkbar gelagerten Schwenkbolzen (12) und einen mit diesem positionsveränderbar verbundenen Tragbolzen (13) umfasst.

4. Anbauplatteneinheit nach Anspruch 3, **dadurch gekennzeichnet, dass** der Tragbolzen (13) als Gewindebolzen (14) ausgeführt ist und in ein an dem Schwenkbolzen (12) ausgeführtes Mutterngewinde (16) eingreift.

5. Anbauplatteneinheit nach einem der Ansprüche 1 bis 4, **dadurch gekennzeichnet, dass** die Augenlasche (28) an der Halteplatte (20) jeweils außermittig angeordnet ist.

## Claims

1. An attachment plate unit for attaching an implement to the front or rear of a vehicle, with an attachment plate (1), two lateral lower linking structures (2) each comprising a lower eye (4), and a centred top linking structure (3) comprising a top eye (5), **characterized in that**:
the top linking structure (3) comprises a top bracket (6) rigidly connected with the attachment plate (1), relative to which top bracket (6) the top eye (5) is adjustable with two degrees of freedom in a plane perpendicular to the attachment plate (1);
the lower linking structures (2) each comprise a lower bracket (19) which can be fixed in different lateral positions relative to the attachment plate (1), which bracket (19) has a mounting plate (20), the lateral position of which relative to the attachment plate (1) is infinitely variable; the lower eyes (4) are provided on respective eye tabs (28), which are attached to the respective mounting plate (20) rotatably about an axis (D) which extends parallel to the attachment plate (1), wherein the attachment of the eye tab (28) to the mounting plate (20) permits the respective eye tab (28) to rotate relative to the mounting plate (20) about an axis (C) which is perpendicular to the attachment plate (1) .

2. The attachment plate unit according to Claim 1, **characterized in that** the two degrees of freedom of the top linking structure (3) comprise a pivotability of an eye support (11) about a horizontal axis (A) which extends parallel to the attachment plate (1) and a change in the effective length of the eye support (11).

3. The attachment plate unit according to Claim 2, **characterized in that** the eye support (11) comprises a pivot bolt (12) which is pivotably supported in the top bracket (6) and a support bolt (13) connected with the pivot bolt (12) such that the position of the support bolt (13) can be changed.

4. The attachment plate unit according to Claim 3, **characterized in that** the support bolt (13) is designed as a threaded bolt (14) and engages in a threaded nut (16) designed on the pivot bolt (12).

5. The attachment plate unit according to any one of Claims 1 to 4, **characterized in that** the eye tabs (28) are arranged off-centre on the respective mounting plates (20) .

## Revendications

1. Unité de plaque de montage pour la fixation côté avant et arrière d'un accessoire sur un véhicule porteur, avec une plaque de montage (1), deux structures d'attache inférieures latérales (2) comportant respectivement un œil inférieur (4) et une structure d'attache supérieure centrale (3) comportant un œil supérieur (5), présentant les caractéristiques suivantes :
la structure d'attache supérieure (3) comporte un support supérieur (6) relié fixement à la plaque de montage (1), par rapport auquel l'œil supérieur (5) peut être réglé dans un plan perpendiculaire à la plaque de montage (1) avec deux degrés de liberté ;
les structures d'attache inférieures (2) comportent respectivement un support inférieur (19) apte à être fixé dans différentes positions latérales par rapport à la plaque de montage (1), lequel présente une plaque de maintien (20) dont la position latérale par rapport à la plaque de montage (1) est modifiable de manière continue ;
les yeux inférieurs (4) sont prévus respectivement sur une patte d'œil (28) fixée de façon pivotante autour d'un axe (D) parallèle à la plaque de montage (1) sur la plaque de maintien (20) correspondante, la fixation de la patte d'œil (28) sur la plaque de maintien (20) permettant respectivement une rotation de la patte d'œil (28) par rapport à la plaque de maintien (20) autour d'un axe (C) s'étendant orthogonalement sur la plaque de montage (1).

2. Unité de plaque de montage selon la revendication 1, **caractérisée en ce que** les deux degrés de liberté de la structure d'attache supérieure (3) comportent une possibilité de pivotement d'un support d'œil (11) autour d'un axe horizontal (A) parallèle à la plaque de montage (1) et une possibilité de modification de la longueur effective du support d'œil (11).

3. Unité de plaque de montage selon la revendication 2, **caractérisée en ce que** le support d'œil (11) comporte un boulon pivotant (12) monté de façon pivotante dans le support supérieur (6) et un boulon porteur (13) relié à celui-ci de façon modulable en position.

4. Unité de plaque de montage selon la revendication 3, **caractérisée en ce que** le boulon porteur (13) est conçu comme un boulon fileté (14) et s'engage dans un filetage d'écrou (16) prévu sur le boulon pivotant (12).

5. Unité de plaque de montage selon l'une des revendications 1 à 4, **caractérisée en ce que** la patte d'œil (28) est disposé respectivement de façon excentrée sur la plaque de maintien (20).
